# EUROPÄISCHE PATENTSCHRIFT

(11) **EP 0 826 123 B1**
(45) Veröffentlichungstag und Bekanntmachung des Hinweises auf die Patenterteilung: **13.12.2000**
(21) Anmeldenummer: 96916145.4
(22) Anmeldetag: 21.05.1996
(51) Int. Cl.: F16L 9/14, F16L 9/10, F16L 49/00

(54) **ROHRLEITUNG**
PIPING
CANALISATION

(30) Priorität: 24.05.1995 DE 19519111
(43) Veröffentlichungstag der Anmeldung: 04.03.1998
(73) Patentinhaber: Deutsches Zentrum für Luft- und Raumfahrt e.V., 53175 Bonn (DE)
(72) Erfinder: KOCIAN, Frank, D-72666 Neckartailfingen (DE); KOCHENDÖRFER, Richard, D-70619 Stuttgart (DE)
(74) Vertreter: Hoeger, Stellrecht & Partner
(86) Internationale Anmeldenummer: EP9602183
(87) Internationale Veröffentlichungsnummer: WO9637721

(56) Entgegenhaltungen:
- DE-A- 4 005 772
- FR-A- 2 491 044
- US-A- 3 631 897
- US-A- 4 200 126

## Beschreibung

Die vorliegende Erfindung betrifft eine Rohrleitung, umfassend mindestens ein Rohr und jeweils eine auf einer Außenwand des Rohres angeordnete Armierung.

Solche Rohrleitungen sind in großer Zahl aus dem Stand der Technik bekannt, siehe beispielsweise die FR-A-2 491 044 und die US-A-4 200 126.

Insbesondere sind Rohrleitungen bekannt, die mit einer Metallmantelarmierung oder mit einer Kunststoffbeschichtung versehene Glasrohre umfassen.

Solche Metall- oder Kunststoffarmierungen sind dazu vorgesehen, die Rohrleitung vor Beschädigungen von außen, beispielsweise in Folge des Aufpralls eines Fremdkörpers auf die Rohrleitung, zu schützen. Diese Armierungen sind aber nicht dazu geeignet, die der Rohrleitung zumutbare Innendruckbelastung wesentlich zu steigern.

Insbesondere für Rohrleitungen mit Rohren aus einem sprödbrüchigen, nur bedingt auf Zug belastbaren Material wie beispielsweise Glas wäre es jedoch wünschenswert, die zulässige Innendruckbelastung erheblich zu steigern, um für solche Rohrleitungen neue Anwendungsgebiete im Hochdruckbereich zu erschließen.

Der vorliegenden Erfindung lag daher die Aufgabe zugrunde, eine Rohrleitung der eingangs genannten Art so zu verbessern, daß der maximale Innendruck, bei dem die Rohrleitung betrieben werden kann, gesteigert wird.

Diese Aufgabe wird bei einer Rohrleitung der genannten Art dadurch gelöst, daß die Armierung in Längsrichtung des Rohres dehnbar ist und eine solche Querkontraktionsfähigkeit aufweist, daß das Rohr durch eine Dehnung der Armierung in Längsrichtung des Rohres mit einer Druck-Vorspannung in Umfangsrichtung des Rohres beaufschlagbar ist.

Das erfindungsgemäße Konzept bietet also den Vorteil, daß jedes Rohr der Rohrleitung durch eine Querkontraktion der sich auf der Außenwand des Rohres abstützenden Armierung in Folge einer Längsdehnung derselben mit einer Druck-Vorspannung beaufschlagt werden kann, die der durch den Betriebs-Innendruck der Rohrleitung bewirkten Zugspannung des Rohres in Umfangsrichtung entgegengesetzt ist. Dadurch ist es möglich, die von dem Betriebs-Innendruck verursachte Zugspannung zumindest teilweise zu kompensieren oder gar überzukompensieren, so daß das Rohr lediglich auf Druck beansprucht wird.

Gerade bei sprödbrüchigen Werkstoffen wie Glas übersteigt die Druckfestigkeit die Zugfestigkeit bei weitem, so daß die Druck-Vorspannung ohne weiteres so gewählt werden kann, daß sie die durch einen beträchtlichen Betriebs-Innendruck (beispielsweise 40 bar bei einem Innendurchmesser von 150 mm) verursachte Zugspannung in Umfangsrichtung des Rohres kompensiert, ohne ein Versagen der Rohrleitung bei einem Abfall des Innendrucks befürchten zu müssen.

Ein weiterer Vorteil der erfindungsgemäßen Rohrleitung ist darin zu sehen, daß die Rohre im Versagensfall kein katastrophales Bruchverhalten zeigen, sondern nur kurze Risse ausbilden, durch die das in der Rohrleitung enthaltene Fluid nur in geringen Mengen entweicht und durch die sich der Innendruck nur langsam abbaut, so daß eine ausreichende Zeit zur Schadensbegrenzung verbleibt.

Da bei einer Dehnung der Armierung in Längsrichtung des Rohres die Armierung durch Querkontraktion auf das Rohr aufschrumpft und von diesem gestützt wird, setzt die auf dem Rohr angeordnete Armierung einer Längsdehnung einen größeren Widerstand entgegen als das bei derselben Armierung ohne das abstützende Rohr der Fall wäre. Dieser Effekt wird im folgenden als Querkontraktionsbehinderung bezeichnet.

Die Elastizität der Armierung bei einer Dehnung der Armierung in Längsrichtung des Rohres mit Querkontraktionsbehinderung ist gegenüber der Elastizität der Armierung ohne Querkontraktionsbehinderung erhöht. Diese Erhöhung entspricht der auf das Rohr übertragenen Druck-Vorspannung in Umfangsrichtung.

Um mit möglichst geringen Spannungen eine gewünschte Dehnung der Armierung und damit eine gewünschte Druck-Vorspannung erzeugen zu können, ist es daher von Vorteil, wenn die Elastizität der Armierung bei einer Dehnung der Armierung in Längsrichtung des Rohres ohne Querkontraktionsbehinderung höchstens ungefähr gleich groß ist wie die Elastizität der Armierung bei einer Dehnung der Armierung in Längsrichtung des Rohres mit Querkontraktionsbehinderung durch das Rohr.

Besonders günstig ist es, wenn die Elastizität der Armierung ohne Querkontraktionsbehinderung höchstens ungefähr die Hälfte, vorzugsweise höchstens ungefähr ein Zehntel der Elastizität der Armierung mit Querkontraktionsbehinderung beträgt.

Im Idealfall wäre die Elastizität der Armierung ohne Querkontraktionsbehinderung gleich null, da dann die gesamte zur Dehnung der Armierung aufgebrachte Spannung in eine Druck-Vorspannung des Rohres umgesetzt werden würde.

Um die Längsdehnung und die damit verbundene Querkontraktion der Armierung zu erleichtern, ein Durchrutschen der Armierung längs der Rohrleitung jedoch zu verhindern, ist es von Vorteil, wenn die Armierung an in Längsrichtung des Rohres voneinander beabstandeten Fixierungsbereichen in Längsrichtung des Rohres relativ zu demselben fixiert und zwischen den Fixierungsbereichen auf der Außenwand des Rohres gleitfähig ist.

Um hohe Druck-Vorspannungen bei relativ kleinen Längsdehnungen der Armierung zu erreichen, weist die Armierung vorteilhafterweise eine hohe Querkontraktionsfähigkeit auf.

Besonders günstig ist es, wenn die Querkontraktionszahl der Armierung mindestens ungefähr 0,4, vorzugsweise mindestens ungefähr 1,0, beträgt.

Vorteilhafterweise weist die Armierung mindestens einen Durchbruch auf. Durch einen solchen Durchbruch ist die Außenwand des Rohres zugänglich, so daß deren Zustand während des Betriebes der Rohrleitung überprüft werden kann.

Besteht das Rohr selbst aus einem transparenten Material, wie beispielsweise Glas, so bleibt diese Transparenz aufgrund des Durchbruchs in der Armierung erhalten, was den Vorteil mit sich bringt, daß der Füllstand eines in der Rohrleitung enthaltenen Fluids von außen kontrolliert werden kann.

Günstig ist es, wenn die Armierung in Längsrichtung des Rohres vorgedehnt ist und das Rohr durch die Vordehnung der Armierung mit einer Druck-Vorspannung in Umfangsrichtung des Rohres beaufschlagt ist. Mit dem Begriff "Vordehnung" ist eine Dehnung der Armierung in Längsrichtung des Rohres gemeint, die bereits im nicht innendruckbelasteten Zustand der Rohrleitung vorliegt, also nicht erst durch eine Längsdehnung des Rohres in Folge des Betriebs-Innendrucks verursacht ist. Durch eine solche Vordehnung können dem Rohr auch im innendrucklosen Ruhezustand beliebig wählbare Druck-Vorspannungen in Umfangsrichtung des Rohres aufgegeben werden.

Besonders günstig ist es, wenn die Druck-Vorspannung des Rohres in Umfangsrichtung der durch den Betriebs-Innendruck des Rohres bewirkten Zugspannung des Rohres in Umfangsrichtung des Rohres im wesentlichen entgegengesetzt gleich groß ist. Dadurch wird erreicht, daß bei dem im Normalbetrieb herrschenden Betriebs-Innendruck die Druck-Vorspannung und die Zugspannung des Rohres in Umfangsrichtung sich gerade aufheben, so daß das Rohr in Umfangsrichtung spannungsfrei ist. In einem solchen spannungsfreien Zustand ist das Rohr besonders widerstandsfähig gegen Beschädigungen von außen.

Zum Dehnen der Armierung in Längsrichtung des Rohres weist die Rohrleitung vorteilhafterweise Krafteinleitungsmittel zum Einleiten einer Kraft in die Armierung in Längsrichtung des Rohres auf.

Ein konstruktiv wenig aufwendiger Aufbau der Rohrleitung wird erreicht, wenn die Armierung zugleich durch die Krafteinleitungsmittel relativ zu dem Rohr fixiert ist, was ein Durchrutschen der Armierung längs der Rohrleitung verhindert.

Eine besonders einfache Einleitung einer Längskraft in die Armierung zur Längsdehnung derselben läßt sich erreichen, wenn die Armierung Durchbrüche aufweist, in die Krafteinleitungselemente der Krafteinleitungsmittel eingreifen.

Insbesondere kann vorgesehen sein, daß die Krafteinleitungselemente mit der Armierung einen Formschluß bilden, der die Armierung in Längsrichtung des Rohres relativ zu den Krafteinleitungselementen fixiert. Eine solche formschlüssige Verbindung zwischen der Armierung und den Krafteinleitungselementen ist zuverlässig und mit geringem Aufwand zu realisieren.

Es kann vorgesehen sein, daß die Krafteinleitungselemente mit Berandungen von Durchbrüchen der Armierung den Formschluß bilden.

Besonders günstig ist es jedoch, wenn die Krafteinleitungselemente zusammen mit Berandungen von Durchbrüchen der Armierung und mit zwischen den Krafteinleitungselementen und den Berandungen angeordneten Formschlußelementen aus in pastöser oder fließfähiger Form eingebrachtem, ausgehärtetem Material den Formschluß bilden. Mittels solcher Formschlußelemente ist es möglich, auch dann ein flächenhaftes Anliegen aller an dem Formschluß beteiligter Elemente zu erreichen, wenn die Geometrie der Krafteinleitungselemente nicht speziell auf die Geometrie der Berandungen der Durchbrüche abgestimmt ist. Ferner ist es möglich, bei der Montage der Rohrleitung die Position der Krafteinleitungselemente relativ zu den Berandungen der Durchbrüche zu variieren, da unterschiedliche Abstände zwischen den Krafteinleitungselementen und den Berandungen der Durchbrüche durch die dazwischen angeordneten Formschlußelemente ausgeglichen werden. Dies erlaubt größere Toleranzen sowohl bei der Fertigung der Armierung als auch bei der Montage der Rohrleitung, was Zeit und Kosten spart und eine höhere Flexibilität bei der Ausgestaltung der Rohrleitung erlaubt.

Vorteilhafterweise ist vorgesehen, daß die Krafteinleitungsmittel eines Rohres an jeweils einem Endbereich des Rohres angeordnet sind. Bei einer solchen Anordnung der Krafteinleitungsmittel können dieselben neben ihrer Funktion, eine Kraft in Längsrichtung des Rohres in die Armierung einzuleiten, auch die zusätzliche Funktion einer Verbindung einander benachbarter Rohre untereinander oder einer Verbindung der Rohrleitung mit anderen Elementen einer die Rohrleitung umfassenden Anlage übernehmen.

Zur Ausgestaltung der Krafteinleitungsmittel wurden bislang noch keine näheren Angaben gemacht.

Bei einer bevorzugten Ausgestaltung der erfindungsgemäßen Rohrleitung ist vorgesehen, daß die Krafteinleitungsmittel eines Rohres mindestens ein Flanschelement umfassen, an dem die Krafteinleitungselemente festgelegt sind.

Besonders günstig ist es, wenn in dieses Flanschelement eine Kraft in Längsrichtung des Rohres, beispielsweise durch Verspannen des Flanschelements mit einem weiteren Element der Rohrleitung, einleitbar ist.

Sollen die Krafteinleitungsmittel eines Rohres zusätzlich die Funktion einer Rohrverbindung, an der zwei Rohre aneinandergrenzen, übernehmen, so ist es von Vorteil, wenn die Rohrleitung ein Flanschelement umfaßt, an dem Krafteinleitungselemente des einen Rohres und des anderen Rohres festgelegt sind.

Alternativ oder ergänzend dazu kann vorgesehen sein, daß die Rohrleitung ein erstes Flanschelement, an dem Krafteinleitungselemente des einen Rohres festgelegt sind, und ein zweites Flanschelement, an dem Krafteinleitungselemente des anderen Rohres festgelegt sind, umfaßt, wobei das erste Flanschelement und das zweite Flanschelement mit einstellbarem Abstand voneinander in Längsrichtung der Rohre aneinander festlegbar sind. Bei dieser Ausgestaltung kann den Armierungen der beiden an der Rohrverbindung beteiligten Rohre durch Verringerung des Abstandes des ersten und des zweiten Flanschelements eine Dehnung in Längsrichtung der Rohre aufgegeben werden.

Um die Ausdehnung der Armierung in Längsrichtung des Rohres oder die Länge des armierten Rohres nicht schon bei der Fertigung für die Verwendung in einer Rohrleitung vorgegebener Geometrie auslegen zu müssen, ist es von Vorteil, wenn die Armierung Durchbrüche aufweist, die in einem in Längsrichtung des Rohres im wesentlichen periodischen Muster angeordnet sind. Die Armierung bzw. das armierte Rohr kann in diesem Fall bei der Montage der Rohrleitung auf die jeweils erforderliche Länge gekürzt werden, wobei eine Vielzahl von Rohrlängen realisierbar ist, die sich jeweils um ein ganzzahliges Vielfaches der Periodizitätslänge des periodischen Musters der Durchbrüche unterscheiden.

Insbesondere ist es somit möglich, die Armierung oder das armierte Rohr durch ein automatisiertes Herstellungsverfahren fortlaufend zu fertigen und erst bei der Montage der Rohrleitung in der erforderlichen Weise abzulängen.

Um ein ausreichend enges Raster realisierbarer Rohrlängen zur Verfügung zu haben, ist es günstig, wenn das Muster der Durchbrüche eine Periodizitätslänge aufweist, die kleiner ist als ungefähr ein Fünftel, vorzugsweise kleiner als ungefähr ein Zehntel des Umfanges des Rohres.

Die Flexibilität bei der Gestaltung der Rohrleitung wird weiter erhöht, wenn das Muster der Durchbrüche aus mehreren, jeweils in Längsrichtung des Rohres im wesentlichen periodischen Teilmustern mit im wesentlichen derselben Periodizitätslänge zusammengesetzt ist, wobei die Durchbrüche jeweils eines Teilmusters gegenüber den Durchbrüchen der anderen Teilmuster in Längsrichtung des Rohres um eine Strecke, die kleiner ist als die Periodizitätslänge der Teilmuster, versetzt angeordnet sind. In diesem Fall ist der Abstand zwischen aufeinanderfolgenden verfügbaren Rohrlängen kleiner als die Periodizitätslänge des Gesamtmusters der Durchbrüche, da wahlweise die Durchbrüche des je nach Rohrlänge jeweils am besten geeigneten Teilmusters verwendet werden können, um beispielsweise einen Formschluß mit den Krafteinleitungselementen der Krafteinleitungsmittel zu bilden.

Beim Vorhandensein von zwei Teilmustern, die in Längsrichtung des Rohres um eine Strecke, die der halben Periodizitätslänge jeweils eines Teilmusters entspricht, versetzt angeordnet sind, stehen demnach sämtliche Rohrlängen zur Verfügung, die sich um jeweils ein Vielfaches der halben Periodizitätslänge voneinander unterscheiden.

Bei einer bevorzugten Ausgestaltung der erfindungsgemäßen Rohrleitung umfaßt die Armierung ein Gitter aus sich kreuzenden, längs der Außenwand des Rohres verlaufenden Gitterstäben. Bei einem solchen Gitter können durch geeignete Orientierung der Gitterstäbe im Prinzip beliebige Querkontraktionszahlen erreicht werden. Ferner ist die Querkontraktionszahl eines Gitters einfacher und exakter einstellbar als die Querkontraktionszahl einer homogenen Schalenstruktur. Darüber hinaus erfolgt eine Dehnung des Gitters in Längsrichtung des Rohres in erster Linie durch Schubverformung und Längsdehnung der Gitterstäbe und nicht durch Biegeverformung der Gitterstäbe. Das Gittermaterial wird daher im wesentlichen nur unidirektional, in Richtung der Gitterstäbe, beansprucht, so daß die volle unidirektionale Festigkeit dieses Materials genutzt werden kann.

Da das Gitter an sich, ohne Innenabstützung auf der Außenwand des Rohres, aufgrund von Schereneffekten einer Längenänderung nur einen geringen Widerstand entgegensetzen würde, also nur eine relativ geringe Elastizität aufweist, wird das Gittermaterial im wesentlichen nur mit denjenigen Spannungen belastet, die zur Erzeugung der erwünschten Druck-Vorspannung des Rohres in Umfangsrichtung erforderlich sind.

Ein weiterer Vorteil des Gitters besteht darin, daß die Gitterstruktur eine offene Struktur mit sehr hohem Flächenanteil an Durchbrüchen sein kann, so daß die Armierung des Rohres vergleichsweise leicht sein und unter geringem Materialeinsatz und somit kostengünstig gefertigt werden kann.

Besonders einfach im Handwickelverfahren oder in automatisierten Wickelverfahren herstellbar ist ein solches Gitter, wenn es Scharen von Gitterstäben umfaßt, wobei die Gitterstäbe jeder Schar jeweils parallel zu den Gitterstäben derselben Schar ausgerichtet sind und die Gitterstäbe anderer Scharen kreuzen.

Vorzugsweise werden die Scharen von Gitterstäben paarweise einander zugeordnet, wobei die Gitterstäbe der einen Schar eines Paares und die Gitterstäbe der anderen Schar des Paares unter entgegengesetzt gleichen Winkeln gegen die Längsrichtung des Rohres ausgerichtet sind. Dadurch wird erreicht, daß das Gitter und somit die in dem Rohr erzeugte Druck-Vorspannungsverteilung bezüglich der Längsachse des Rohres rotationssymmetrisch sind.

Das Querkontraktionsverhalten des Gitters ist am einfachsten kontrollierbar und die Fertigung des Gitters ist am kostengünstigsten, wenn das Gitter nur zwei Scharen von Gitterstäben umfaßt, wobei vorzugsweise die Gitterstäbe der einen Schar und die Gitterstäbe der anderen Schar unter entgegengesetzt gleichen Winkeln gegen die Längsrichtung des Rohres ausgerichtet sind.

Besonders günstig ist es, wenn dieser entgegengesetzt gleiche Winkel ungefähr 58° bis 68°, insbesondere ungefähr 63,5°, beträgt.

Es sei an dieser Stelle angemerkt, daß unter den vorstehend und im folgenden angegebenen Winkel jeweils die betragsmäßig kleineren der beiden Winkel, die die Gitterstäbe mit der Längsrichtung des Rohres bilden, zu verstehen sind.

Bei einem entgegengesetzt gleichen Winkel der beiden Gitterstab-Scharen von ungefähr 63,5° gegen die Längsrichtung des Rohres beträgt die Querkontraktionszahl des Gitters ungefähr 0,5.

Aus einer vektoriellen Zerlegung der längs der Gitterstäbe übertragenen Kräfte in Komponenten in Längsrichtung des Rohres und in Umfangsrichtung des Rohres ergibt sich, daß in diesem Fall die durch das Gitter übertragenen Kräfte in Umfangsrichtung des Rohres etwa doppelt so groß sind wie die durch das Gitter übertragenen Kräfte in Längsrichtung des Rohres. Folglich ist die mittels des Gitters in dem Rohr erzeugbare Druck-Vorspannung in Umfangsrichtung des Rohres ungefähr doppelt so groß wie die in Längsrichtung des Rohres erzeugbare Druck-Vorspannung. Da andererseits gemäß der allgemein bekannten Kesselformel das Verhältnis der durch einen Betriebs-Innendruck in dem Rohr erzeugten Zugspannungen in Umfangs- und in Längsrichtung des Rohres ebenfalls 2:1 beträgt, können diese durch den Betriebs-Innendruck erzeugten Zugspannungen bei der angegebenen Gittergeometrie durch eine geeignete Längsdehnung des Gitters gleichzeitig in Umfangsrichtung und in Längsrichtung des Rohres kompensiert werden, so daß sich im Idealfall ein in Umfangsrichtung und in Längsrichtung spannungsfreies Rohr ergibt.

Durch Reibung zwischen der Armierung (dem Gitter) und der Außenwand des Rohres kann die lokale Längsdehnung der Armierung und damit die auf das Rohr ausgeübte Druck-Vorspannung in unerwünschter Weise reduziert werden.

Insbesondere kann, wenn die Armierung an Fixierungsbereichen des Rohres fixiert ist, die Druck-Vorspannung zu einem zwischen den Fixierungsbereichen angeordneten Mittelbereich des Rohres hin abnehmen.

Um diesen unerwünschten Effekt zu reduzieren, kann bei einem Gitter, das zwei Scharen von Gitterstäben umfaßt, die unter entgegengesetzt gleichen Winkeln gegen die Längsrichtung des Rohres ausgerichtet sind, vorteilhafterweise vorgesehen sein, daß diese entgegengesetzt gleichen Winkel längs des Rohres variieren.

So ist es günstig, wenn die entgegengesetzt gleichen Winkel von einem Fixierungsbereich des Rohres zu dem nächstbenachbarten Fixierungsbereich des Rohres hin monoton zunimmt.

Besonders günstig ist es, wenn der entgegengesetzt gleiche Winkel von den Fixierungsbereichen des Rohres zu dem zwischen den Fixierungsbereichen des Rohres angeordneten Mittelbereich des Rohres hin monoton zunimmt.

In den Bereichen, in denen der entgegengesetzt gleiche Winkel gegen die Längsrichtung des Rohres klein ist, ist der Einfluß der Reibung auf die Dehnung des Gitters in Längsrichtung reduziert, während in den Bereichen, in denen der entgegengesetzt gleiche Winkel groß ist, die auf das Rohr übertragbare Druck-Vorspannung in Umfangsrichtung höher ist.

Durch eine Verringerung des entgegengesetzt gleichen Winkels nahe der Fixierungsbereiche des Rohres kann daher eine höhere lokale Längsdehnung in den Mittelbereich des Rohres übertragen werden.

Zu dem Material, aus dem die Armierung der erfindungsgemäßen Rohrleitung besteht, wurden bislang keine näheren Angaben gemacht.

Von Vorteil ist es, wenn diese Armierung zumindest teilweise aus einem Faserverbundwerkstoff besteht. Bei Verwendung solcher Faserverbundwerkstoffe ist es möglich, durch eine Variation von Fasersteifigkeit und Faserorientierung das Querkontraktionsverhalten der Armierung zu beeinflussen und selbst bei einer homogenen Schalenstruktur der Armierung Querkontraktionszahlen bis zu 2,0 zu erhalten. Bei Verwendung einer Armierung in Form eines Gitters tritt der Vorteil hinzu, daß Faserverbundwerkstoffe eine besonders hohe unidirektionale Festigkeit in Faserrichtung aufweisen.

Um eine besonders hohe Festigkeit der Armierung bei vergleichsweise geringem Gewicht zu erreichen, ist es von Vorteil, wenn die Armierung zumindest teilweise aus Karbonfasern besteht.

Besteht die Armierung alternativ oder ergänzend dazu zumindest teilweise aus Glasfasern, so können hierdurch Herstellungskosten eingespart werden, sofern die mechanischen Anforderungen an die Armierung nicht allzu hoch sind.

Wie bereits erwähnt, kann durch Reibung zwischen der Armierung und der Außenwand des Rohres die auf das Rohr ausgeübte Druck-Vorspannung in unerwünschter Weise reduziert werden.

Es ist daher von Vorteil, wenn ein Gleitmittel, das diese Reibung reduziert, beispielsweise ein Kriechöl zwischen der Armierung und der Außenwand des Rohres angeordnet ist.

Insbesondere kann vorgesehen sein, daß die der Außenwand des Rohres zugewandte Oberfläche der Armierung mit einem Gleitmittel versehen ist.

Alternativ oder ergänzend dazu kann vorgesehen sein, daß ein Gleitmittel in eine die Fasern umgebende Matrix der Armierung eingebettet ist.

Aufgrund des durch die bereits genannte Kesselformel vorgegebenen Verhältnisses der durch einen Innendruck in dem Rohr bewirkten Zugspannungen in Umfangs- und in Längsrichtung des Rohres begrenzt in der Regel die in Umfangsrichtung des Rohres auftretende Zugspannung die Innendruckbelastbarkeit der Rohrleitung.

Um jedoch bei Versagen des Rohres ein katastrophales Berstverhalten noch besser zu vermeiden und die Rohrleitung widerstandsfähiger gegen Beschädigungen von außen, beispielsweise durch das Auftreffen eines Fremdkörpers auf die Rohrleitung, zu machen, ist es von Vorteil, wenn das Rohr zusätzlich mit einer Druck-Vorspannung in Längsrichtung des Rohres beaufschlagbar ist. Diese Druck-Vorspannung in Längsrichtung des Rohres kompensiert zumindest teilweise die durch den Betriebs-Innendruck erzeugte Zugspannung in Längsrichtung des Rohres.

Besonders günstig ist es, wenn das Rohr mit einer Druck-Vorspannung in Längsrichtung des Rohres beaufschlagt ist, die der durch den Betriebs-Innendruck des Rohres bewirkten Zugspannung des Rohres in Längsrichtung des Rohres im wesentlichen entgegengesetzt gleich groß ist, da sich auf diese Weise ein spannungsfreier Zustand des Rohres in Längsrichtung desselben ergibt.

Weitere Merkmale und Vorteile der Erfindung sind Gegenstand der nachfolgenden Beschreibung und zeichnerischen Darstellung eines Ausführungsbeispiels.

In der Zeichnung zeigen:
- Fig. 1: eine Draufsicht auf eine erfindungsgemäße Rohrleitung mit zwei Rohrverbindungen;
- Fig. 2: einen Querschnitt durch die Rohrleitung längs der Linie 2-2 in Fig. 1;
- Fig. 3: einen Ausschnitt aus einer Abwicklung der erfindungsgemäßen Rohrleitung im Bereich I der Fig. 1;
- Fig. 4: einen Ausschnitt aus einer Abwicklung der erfindungsgemäßen Rohrleitung im Bereich II in Fig. 1;
- Fig. 5: einen Längsschnitt durch eine Rohrverbindung der erfindungsgemäßen Rohrleitung längs der Linie 5-5 in Fig. 1;
- Fig. 6: einen Längsschnitt durch eine Rohrverbindung der erfindungsgemäßen Rohrleitung längs der Linie 6-6 in Fig. 1.

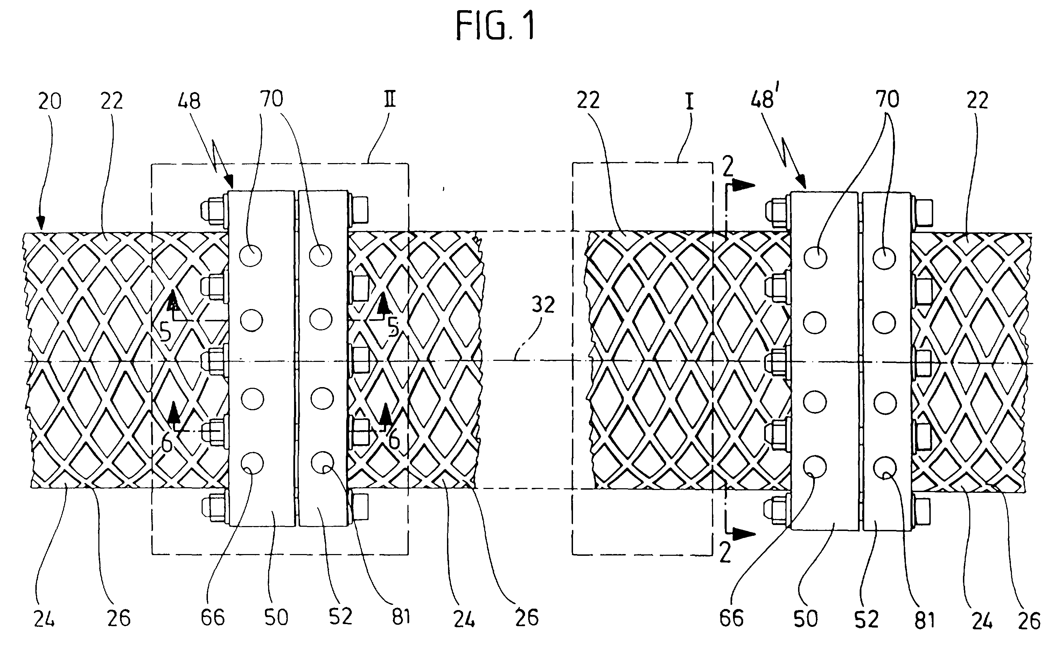

Eine in den Fig. 1 bis 6 dargestellte, als Ganzes mit 20 bezeichnete erfindungsgemäße Rohrleitung umfaßt mehrere hohlzylindrische, koaxiale, in Achsrichtung hintereinander angeordnete Rohre 22 gleichen Durchmessers.

Jedes der Rohre 22 kann beispielsweise aus einem sprödbrüchigen Material wie Glas gefertigt sein.

Auf einer Außenwand 24 jeden Rohres 22 ist eine Armierung in Form eines auf der Außenwand 24 aufliegenden Gitters 26 angeordnet.

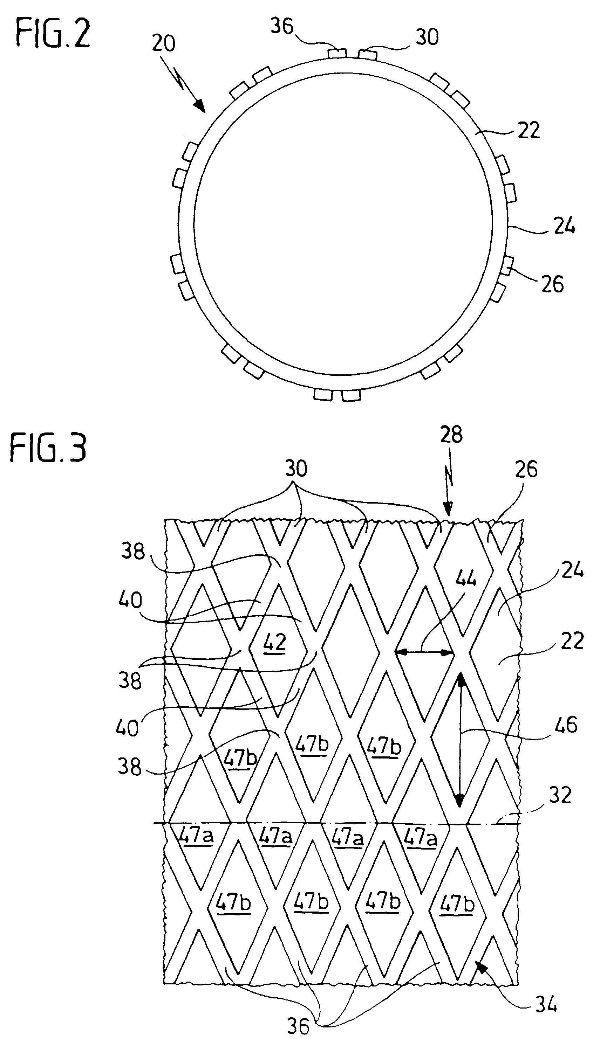

Wie am besten aus der in Fig. 3 dargestellten Abwicklung zu sehen ist, umfaßt jedes Gitter 26 eine erste Schar 28 von mehreren, beispielsweise zehn Gitterstäben 30, welche das jeweilige Rohr 22 wendelförmig umgeben und unter einem konstanten Winkel von plus ungefähr 63° gegen die Richtung einer Längsachse 32 der Rohre 22 ausgerichtet sind.

Die Gitterstäbe 30 der ersten Schar 28 sind parallel und äquidistant zueinander angeordnet.

Ferner umfaßt das Gitter 26 eine zweite Schar 34 von mehreren, beispielsweise ebenfalls zehn Gitterstäben 36, die ebenfalls das jeweilige Rohr 22 wendelförmig umgeben und unter einem konstanten Winkel von minus ungefähr 63° gegen die Richtung der Längsachse 32 der Rohre 22 ausgerichtet sind.

Auch die Gitterstäbe 36 der zweiten Schar 34 sind parallel und äquidistant zueinander angeordnet.

Die Gitterstäbe 30 der ersten Schar 28 kreuzen die Gitterstäbe 36 der zweiten Schar 34 an Gitterknoten 38. Ein zwischen jeweils zwei Gitterknoten 38 angeordneter Abschnitt eines Gitterstabes 30 oder 36 wird im folgenden als Gitterstrebe 40 bezeichnet. Jeweils vier Gitterknoten 38 und die dazwischen angeordneten vier Gitterstreben 40 begrenzen eine im wesentlichen rautenförmige Gitteröffnung 42.

Aufgrund der vorstehend beschriebenen Ausrichtung der Gitterstäbe 30, 36 weist jede der Gitteröffnungen 42 eine erste Diagonale 44 in Längsrichtung der Rohre 22 und eine zweite Diagonale 46 in Umfangsrichtung der Rohre 22 auf, wobei die Länge der zweiten Diagonale 46 ungefähr das Doppelte der Länge der ersten Diagonale 44 beträgt.

Wie am besten in Fig. 3 zu sehen, bilden die rautenförmigen Durchbrüche 42 zwei in Längsrichtung des Rohres 22 periodische Teilmuster 47a und 47b, wobei die Periodizitätslänge jedes Teilmusters 47a, 47b dem Abstand zweier in Längsrichtung des Rohres 22 aufeinanderfolgender Gitterknoten 38 entspricht und die Durchbrüche 42 des einen Teilmusters 47a gegenüber den Durchbrüchen 42 des anderen Teilmusters 47b in Längsrichtung des Rohres 22 um eine Strecke, die der halben Periodizitätslänge entspricht, versetzt angeordnet sind.

Die Gitterstäbe 30, 36 bestehen vorzugsweise aus einem Faserverbundwerkstoff, der beispielsweise Kohlenstoffasern (Karbonfasern) oder Glasfasern umfaßt. Die Verwendung von Glasfasern senkt die Materialkosten, während bei der Verwendung von Kohlenstoffasern bei gleichem Gewicht des Gitters 26 eine höhere Festigkeit und Steifigkeit oder aber bei geringerem Gewicht und gleicher Festigkeit eine höhere Steifigkeit als bei der Verwendung von Glasfasern erreicht werden können.

Die Gitter 26 können direkt auf den jeweils zu armierenden Rohren 22 hergestellt werden, indem die Fasern längs der Richtung der Gitterstäbe 30, 36 auf die Außenwand 24 des jeweiligen Rohrs 22 aufgewickelt werden. Dabei wird günstigerweise so gewickelt, daß sich an den Gitterknoten 38 abwechselnd je eine Faser eines Gitterstabes 30 der ersten Schar 28 und eine Faser eines Gitterstabes 36 der zweiten Schar 34 kreuzen.

Insbesondere für eine Herstellung der Gitter 26 im Handwickelverfahren ist es günstig, wenn vor dem Wickelvorgang an den für die Gitteröffnungen 42 vorgesehenen Stellen auf der Außenwand 24 des Rohrs 22 rautenförmige Formteile, beispielsweise Wachsformteile so angeordnet werden, daß zwischen diesen Wachsformteilen Kanäle zur Aufnahme der aufzuwickelnden Fasern gebildet werden.

An den Wickelvorgangs schließt sich ein Warmauslagerungsprozeß an, in dessen Verlauf gegebenenfalls auch die verwendeten Wachsformteile ausgeschmolzen werden.

Statt das Gitter 26 direkt auf dem zu armierenden Rohr 22 zu fertigen, kann das Gitter 26 auch durch Aufwickeln auf einen weiteren Wickelkörper hergestellt und anschließend auf das zu armierende Rohr 22 aufgezogen werden.

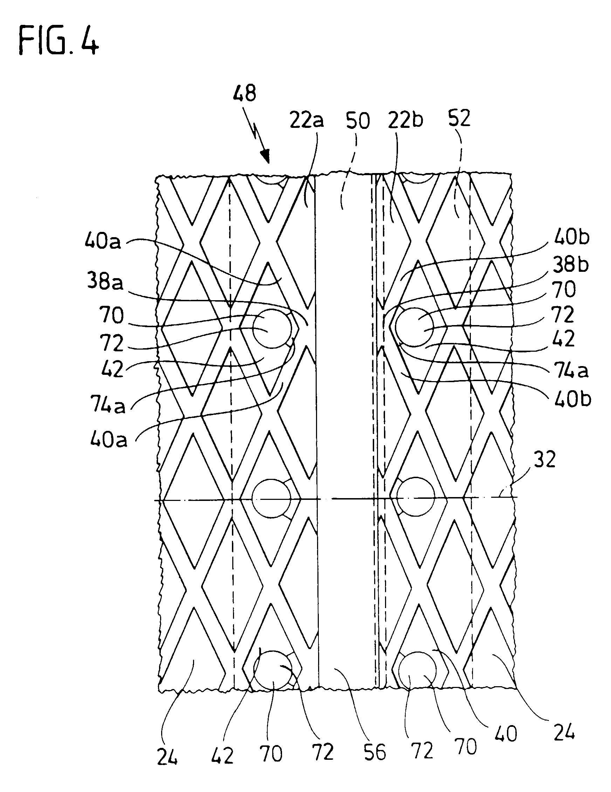

Zur Fixierung der Gitter 26 an den Endbereichen der Rohre 22 und zur Verbindung je zweier Rohre 22 miteinander weist die Rohrleitung 20 jeweils als Ganzes mit 48 bezeichnete Rohrverbindungen auf, die in den Fig. 4 bis 6 detailliert dargestellt sind.

Jede der Rohrverbindungen 48 umfaßt ein im wesentlichen hohlzylindrisches erstes Flanschelement 50, das einen Endbereich des ersten der miteinander zu verbindenden Rohre (in den Fig. 4 bis 6 mit 22a bezeichnet) konzentrisch umgibt, sowie ein im wesentlichen hohlzylindrisches zweites Flanschelement 52, das einen dem ersten Rohr 22a zugewandten Endbereich des zweiten der miteinander zu verbindenden Rohre (in den Fig. 4 bis 6 mit 22b bezeichnet) konzentrisch umgibt. Die Flanschelemente 50 und 52 sind in der in Fig. 4 dargestellten Abwicklung mit gebrochenen Linien dargestellt.

Das erste Flanschelement 50 trägt an seiner Innenseite einen ringförmigen Vorsprung 54 mit rechteckigem Querschnitt, der in einen zwischen den Rohren 22a und 22b angeordneten Spalt 56 eingreift.

Der Vorsprung 54 trägt seinerseits eine ringförmige Dichtung 58 mit im wesentlichem U-förmigen Querschnitt, deren dem Vorsprung 54 abgewandte Unterseite 60 mit den Innenwänden 62 der beiden Rohre 22a und 22b bündig ist und die mit ihren Seitenflächen 64 an den Stirnseiten der Rohre 22a und 22b anliegt, so daß die Dichtung 58 den Innenraum der Rohre 22a und 22b dicht gegen deren Außenraum abschließt.

Ferner weist das erste Flanschelement 50 mehrere, beispielsweise zehn längs seines Umfangs äquidistant zueinander angeordnete, das erste Flanschelement 50 in radialer Richtung durchsetzende Gewindebohrungen 66 auf.

In jede der Gewindebohrungen 66 ist ein mit einem Außengewinde versehener Fixierbolzen 70 eingeschraubt, der an seinem unteren Ende eine kegelstumpfförmige Krafteinleitungsspitze 72 trägt, welche in eine der Gitteröffnungen 42 des Gitters 26 auf dem ersten Rohr 22a eingreift und auf der Außenwand 24 des ersten Rohres 22a aufliegt.

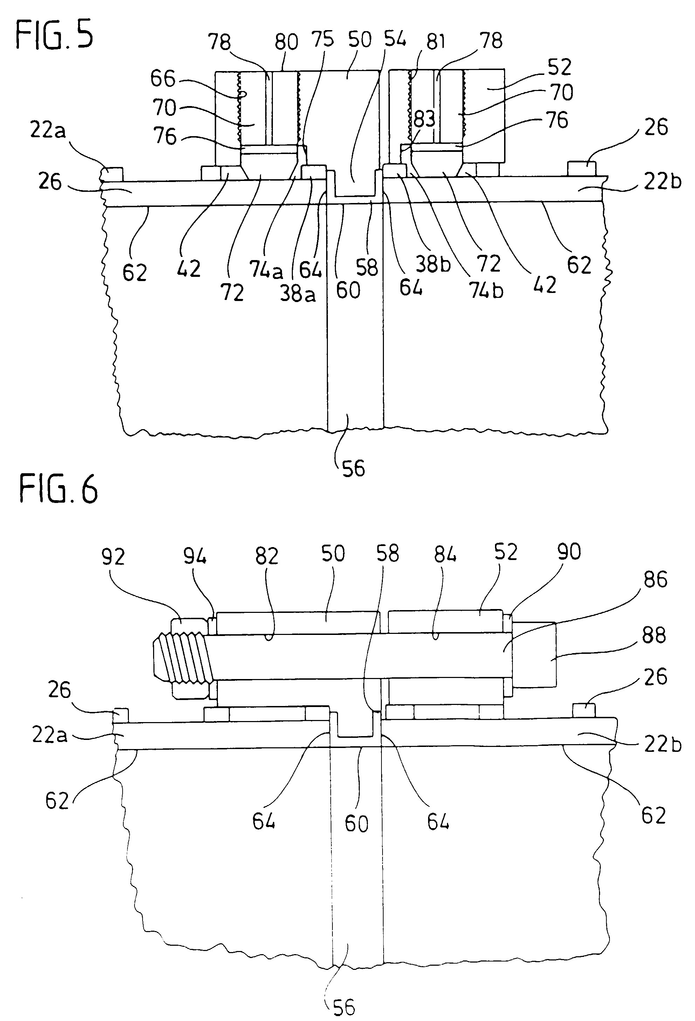

Zwischen jeder Krafteinleitungsspitze 72 und dem derselben in Richtung auf das zweite Rohr 22b zu nächstbenachbarten Gitterknoten, der in den Fig. 4 und 5 mit 38a bezeichnet ist, ist ein Formschlußelement 74a angeordnet, an dem die Krafteinleitungsspitze 72 und zwei dem Gitterknoten 38a benachbarte Gitterstreben 40a flächenhaft anliegen, so daß eine Bewegung der Krafteinleitungsspitze 72 und des Gitterknotens 38a aufeinander zu verhindert wird.

Das Formschlußelement 74a besteht aus einer in dem Zwischenraum zwischen der Krafteinleitungsspitze 72 und dem Gitterknoten 38a ausgehärteten Füllmasse, beispielsweise aus einem eingedickten Harz, Zement oder aus einer niedrig schmelzenden Metallegierung.

Zum Einfüllen der Füllmasse in den genannten Zwischenraum weist der Fixierbolzen 70 einen den Fixierbolzen 70 in radialer Richtung durchsetzenden radialen Füllkanal 76 auf, der auf der Außenseite des Fixierbolzens 70 in eine Ausnehmung 75 in dem Flanschelement 50 mündet, sowie einen mittigen axialen Füllkanal 78, der eine Oberseite 80 des Fixierbolzens 70 mit dem radialen Füllkanal 76 verbindet.

Die Ausnehmung 75 des Flanschelements 50 stellt eine Verbindung zwischen einem Ende des radialen Füllkanals 76 und der Innenseite des Flanschelements 50 her, während das der Ausnehmung 75 abgewandte Ende des radialen Füllkanals 76 durch das Flanschelement verschlossen ist, so daß dort keine Füllmasse austreten kann.

Ebenso wie das erste Flanschelement 50 weist das zweite Flanschelement 52 längs seines Umfangs äquidistant zueinander angeordnete, das zweite Flanschelement in radialer Richtung durchsetzende Gewindebohrungen 81 und Ausnehmungen 83 auf. In jede der Gewindebohrungen 81 des zweiten Flanschelements 52 ist ein Fixierbolzen 70 eingeschraubt, der mit den Fixierbolzen 70 in den Gewindebohrungen 66 des ersten Flanschelementes 50 identisch ausgebildet ist und dessen kegelförmige Krafteinleitungsspitze 72 in eine Gitteröffnung 42 des Gitters 26 des zweiten Rohres 22b der Rohrverbindung 48 eingreift und mit seiner Unterseite auf der Außenwand 24 des zweiten Rohres 22b aufliegt.

Zwischen jeder Krafteinleitungsspitze 72 und dem derselben in Richtung auf das erste Rohr 22a zu nächstbenachbarten Gitterknoten 38b ist ein Formschlußelement 74b angeordnet, an dem die Krafteinleitungsspitze 72 und dem Gitterknoten 38b benachbarte Gitterstreben 40b flächenhaft anliegen, so daß eine Bewegung der Krafteinleitungsspitze 72 und des Gitterknotens 38b aufeinander zu verhindert wird.

Das Formschlußelement 74b wird ebenso wie die Formschlußelemente 74a dadurch gebildet, daß über einen axialen Füllkanal 78 und einen radialen Füllkanal 76 des zugehörigen Fixierbolzens 70 sowie die jeweilige Ausnehmung 83 eine pastöse oder flüssige, schnell aushärtende Füllmasse in den Zwischenraum zwischen der Krafteinleitungsspitze 72 und dem Gitterknoten 38b eingespritzt wird und dort aushärtet.

Wie in Fig. 1 zu sehen, weisen das erste Flanschelement 50 und das zweite Flanschelement 52 ferner dieselben durchsetzende Axialbohrungen 82 bzw. 84 auf, die längs des Umfangs der Flanschelemente 50 und 52 äquidistant zueinander jeweils zwischen zwei radialen Gewindebohrungen 66 bzw. 81 angeordnet sind, wobei jeweils eine Axialbohrung 82 im ersten Flanschelement 50 mit einer Axialbohrung 84 im zweiten Flanschelement 52 fluchtet.

Jedes Paar von Axialbohrungen 82 und 84 wird von jeweils einer Spannschraube 86 durchsetzt, deren Kopf 88 auf einer ersten Unterlegscheibe 90 aufliegt, welche wiederum auf der dem ersten Flanschelement 50 abgewandten Stirnseite des zweiten Flanschelementes 52 aufliegt. Auf ein aus der Axialbohrung 82 des ersten Flanschelementes 50 hervorstehendes, mit Außengewinde versehenes Ende der Spannschraube 86 ist eine Spannmutter 92 aufgeschraubt, die auf einer zweiten Unterlegscheibe 94 aufliegt, welche wiederum auf der dem zweiten Flanschelement 52 abgewandten Stirnseite des ersten Flanschelementes 50 aufliegt.

Durch Anziehen der Spannmuttern 92 auf den Spannschrauben 86 können die beiden Flanschelemente 50 und 52 und damit die formschlüssig an denselben festgelegten Gitterknoten 38a bzw. 38b aufeinander zu bewegt werden.

Die Gitter 26 der beiden Rohre 22a und 22b sind an den der Rohrverbindung 48 abgewandten Enden dieser Rohre ebenfalls, beispielsweise durch eine analog zu der Rohrverbindung 48 aufgebaute Rohrverbindung 48' (siehe Fig. 1), festgelegt, so daß die Gitter 26 der Rohre 22 in axialer Richtung der Rohre 22 durch Anziehen der Spannmuttern 92 auf den Spannschrauben 86 einer Längsdehnung unterworfen werden können.

Durch das Verspannen der Flanschelemente 50 und 52 gegeneinander ist somit eine Kraft in Längsrichtung der Rohre 22a, 22b in das Gitter 26 einleitbar.

Somit dienen die gegeneinander verspannbaren Flanschelemente 50 und 52 zusammen mit den Fixierbolzen 70 und den Formschlußelementen 74a, 74b als Krafteinleitungsmittel für die Gitter 26. Ferner bilden die Endbereiche der Rohre 22, in denen die Fixierbolzen 70 in Durchbrüche 42 der Gitter 26 eingreifen, Fixierungsbereiche, an denen die Gitter 26 relativ zu den jeweils zugehörigen Rohren 22 fixiert sind.

Aufgrund der Kegelstumpfform der Krafteinleitungsspitzen 72 der Fixierbolzen 70 sind ferner die Rohre 22a, 22b bis in ihre Endbereiche direkt mit einer Druck-Vorspannung beaufschlagbar.

Zwischen den Rohrverbindungen 48, 48' können die Gitter 26 frei auf den Außenwänden 24 der Rohre 22 abgleiten. Da der Winkel, unter dem sich die Gitterstäbe 30 und 36 der ersten Schar 28 bzw. der zweiten Schar 34 gegenseitig kreuzen, relativ leicht veränderbar ist, erfolgt die Längsdehnung der Gitter 26 in erster Linie durch Schubverformung und Längsdehnung der Gitterstäbe 30, 36 und nicht durch Biegeverformung der Gitterstreben 40. Dies führt zu einer Reduktion der Biegespannungen an den Gitterknoten 38, so daß die Gitter 26 im wesentlichen nur eindimensional, nämlich in Längsrichtung der Gitterstreben 40, belastet werden und somit die volle unidirektionale Festigkeit der Faserverbundwerkstoffe, aus denen die Gitterstäbe 30, 36 gefertigt sind, in Faserrichtung genutzt werden kann.

Bei der Schubverformung der Gitterstäbe 30, 36 zur Aufnahme der Längsdehnung der Gitter 26 nimmt die Länge der ersten Diagonalen 44 der Gitteröffnungen 42 zu, während die Länge der zweiten Diagonalen 46 abnimmt. Die Längsdehnung der Gitter 26 führt folglich zu einer Querkontraktion derselben, so daß die Gitter 26 auf die jeweils zugeordneten Rohre 22 aufschrumpfen und das jeweilige Rohr 22 mit einer Druck-Vorspannung in Umfangsrichtung beaufschlagen.

Wird das Innere der Rohrleitung 20 mit einem unter einem Innendruck stehenden Fluid gefüllt, so wird jedes der Rohre 22 aufgrund dieses Innendrucks mit einer Zugspannung in Umfangsrichtung beaufschlagt, die der durch die Querkontraktion des jeweiligen Gitters 26 bewirkten Druck-Vorspannung entgegengerichtet ist. Die vom Material der Rohre 22 aufzunehmende Zugspannung in Umfangsrichtung aufgrund des Innendruckes wird also um den Betrag der mittels der Armierung (der Gitter 26) in die Rohre 22 eingeleiteten Vorspannung verringert, so daß der von der Rohrleitung 20 maximal tragbare Innendruck sich entsprechend erhöht.

Idealerweise wird die Druck-Vorspannung durch Anziehen der Spannmuttern 92 so eingestellt, daß die Druck-Vorspannung im wesentlichen gleich groß wie die Zugspannung in Umfangsrichtung aufgrund des vorgesehenen Betriebs-Innendruckes (von beispielsweise 40 bar) ist. Dadurch ist gewährleistet, daß die Rohre 22 im Betriebszustand praktisch spannungsfrei sind.

Da die Reibung zwischen den Gitterstäben 30, 36 einerseits und der Außenwand 24 der Rohre 22 andererseits die mittels der Längsdehnung der Gitter 26 im Mittelbereich jeden Rohres 22 erzeugte Druck-Vorspannung reduzieren kann, ist es günstig, bei der Montage der Rohrleitung 20 zunächst die Gitter 26 so vorzudehnen, daß sich in den Randbereichen der Rohre 22 eine über den vorstehend genannten idealen Wert hinausgehende Druck-Vorspannung einstellt. Anschließend wird die Vordehnung der Gitter 26 wieder so weit verringert, daß längs der Rohre 22 eine homogene Druck-Vorspannung mit dem vorstehend genannten idealen Wert erhalten wird.

Alternativ oder ergänzend zu einer Überhöhung der Druck-Vorspannung über den idealen Wert hinaus bei der Montage der Rohrleitung 20 kann vorgesehen sein, die Reibung zwischen den Gitterstäben 30, 36 und den Außenwänden 24 der Rohre 22 durch die Verwendung von Gleitmitteln, wie beispielsweise Kriechölen, zu verringern, um eine unerwünschte Reduktion der Druck-Vorspannung zu vermeiden.

Ein weiterer Vorteil der erfindungsgemäßen Rohrleitung 20 besteht darin, daß die Gitter 26 die von den Rohren 22 aufgrund des Innendrucks aufzunehmende Zugspannung in Axialrichtung verringern.

Schließlich ist die erfindungsgemäße Rohrleitung 20 auch widerstandsfähiger gegen Beschädigungen von außen, beispielsweise infolge des Aufpralls eines Fremdkörpers auf die Rohrleitung, als herkömmliche Rohrleitungen.

Zum einen zeigen nämlich die unter Vorspannung gesetzten Rohre 22 erst bei einem höheren Impuls eines auf die Rohrleitung 20 auftreffenden Fremdkörpers als bei herkömmlichen Rohrleitungen eine Rißbildung; zum anderen verläuft die Rißbildung, wenn sie auftritt, nicht katastrophal, wie bei herkömmlichen Rohrleitungen mit Rohren aus sprödem Material, wie beispielsweise Glas, sondern es bilden sich aufgrund der Armierung nur kurze Risse aus, durch die das in der Rohrleitung 20 enthaltene Fluid nur in geringen Mengen entweicht und durch die sich der Innendruck nur langsam abbaut, so daß im Schadensfall eine ausreichende Zeit für Maßnahmen zur Schadensbegrenzung verbleibt.

## Patentansprüche

1. Rohrleitung, umfassend mindestens ein Rohr und jeweils eine auf einer Außenwand des Rohres angeordnete Armierung,
**dadurch gekennzeichnet,**
daß die Armierung in Längsrichtung des Rohres (22) dehnbar ist und eine solche Querkontraktionsfähigkeit aufweist, daß das Rohr (22) durch Dehnung der Armierung in Längsrichtung des Rohres (22) mit einer Druck-Vorspannung in Umfangsrichtung des Rohres (22) beaufschlagbar ist.

2. Rohrleitung nach Anspruch 1, dadurch gekennzeichnet, daß die Elastizität der Armierung bei einer Dehnung der Armierung in Längsrichtung des Rohres (22) ohne Querkontraktionsbehinderung höchstens ungefähr gleich groß ist wie die Elastizität der Armierung bei einer Dehnung der Armierung in Längsrichtung des Rohres (22) mit Querkontraktionsbehinderung durch das Rohr (22).

3. Rohrleitung nach Anspruch 2, dadurch gekennzeichnet, daß die Elastizität der Armierung ohne Querkontraktionsbehinderung höchstens ungefähr die Hälfte, vorzugsweise höchstens ungefähr ein Zehntel, der Elastizität der Armierung mit Querkontraktionsbehinderung beträgt.

4. Rohrleitung nach einem der voranstehenden Ansprüche, dadurch gekennzeichnet, daß die Armierung an in Längsrichtung des Rohres (22) voneinander beabstandeten Fixierungsbereichen in Längsrichtung des Rohres (22) relativ zu demselben fixiert und zwischen den Fixierungsbereichen auf der Außenwand (24) des Rohres (22) gleitfähig ist.

5. Rohrleitung nach einem der voranstehenden Ansprüche, dadurch gekennzeichnet, daß die Querkontraktionszahl der Armierung mindestens ungefähr 0,4 beträgt.

6. Rohrleitung nach Anspruch 5, dadurch gekennzeichnet, daß die Querkontraktionszahl der Armierung mindestens ungefähr 1,0 beträgt.

7. Rohrleitung nach einem der voranstehenden Ansprüche, dadurch gekennzeichnet, daß die Armierung mindestens einen Durchbruch (42) aufweist.

8. Rohrleitung nach einem der voranstehenden Ansprüche, dadurch gekennzeichnet, daß die Armierung in Längsrichtung des Rohres (22) vorgedehnt ist und das Rohr (22) durch die Vordehnung der Armierung mit einer Druck-Vorspannung in Umfangsrichtung des Rohres (22) beaufschlagt ist.

9. Rohrleitung nach Anspruch 8, dadurch gekennzeichnet, daß die Druck-Vorspannung des Rohres (22) in Umfangsrichtung der durch den Betriebs-Innendruck des Rohres (22) bewirkten Zugspannung des Rohres (22) in Umfangsrichtung des Rohres (22) im wesentlichen entgegengesetzt gleich groß ist.

10. Rohrleitung nach einem der voranstehenden Ansprüche, dadurch gekennzeichnet, daß die Rohrleitung (20) Krafteinleitungsmittel zum Dehnen der Armierung in Längsrichtung des Rohres (22) aufweist.

11. Rohrleitung nach Anspruch 10, dadurch gekennzeichnet, daß die Armierung durch die Krafteinleitungsmittel relativ zu dem Rohr (22) fixiert ist.

12. Rohrleitung nach einem der Ansprüche 10 oder 11, dadurch gekennzeichnet, daß die Armierung Durchbrüche (42) aufweist, in die Krafteinleitungselemente (70) der Krafteinleitungsmittel eingreifen.

13. Rohrleitung nach Anspruch 12, dadurch gekennzeichnet, daß die Krafteinleitungselemente (70) mit der Armierung einen Formschluß bilden, der die Armierung in Längsrichtung des Rohres (22) relativ zu den Krafteinleitungselementen (70) fixiert.

14. Rohrleitung nach Anspruch 13, dadurch gekennzeichnet, daß die Krafteinleitungselemente (70) zusammen mit Berandungen von Durchbrüchen (42) der Armierung den Formschluß bilden.

15. Rohrleitung nach Anspruch 13, dadurch gekennzeichnet, daß die Krafteinleitungselemente (70) zusammen mit Berandungen von Durchbrüchen (42) der Armierung und mit zwischen den Krafteinleitungselementen (70) und den Berandungen angeordneten Formschlußelementen (74a, 74b) aus in pastöser oder fließfähiger Form eingebrachtem, ausgehärtetem Material den Formschluß bilden.

16. Rohrleitung nach einem der Ansprüche 12 bis 15, dadurch gekennzeichnet, daß die Krafteinleitungsmittel eines Rohres (22) an jeweils einem Endbereich des Rohres (22) angeordnet sind.

17. Rohrleitung nach einem der Ansprüche 12 bis 16, dadurch gekennzeichnet, daß die Krafteinleitungsmittel eines Rohres (22) mindestens ein Flanschelement (50, 52) umfassen, an dem die Krafteinleitungselemente (70) festgelegt sind.

18. Rohrleitung nach Anspruch 17, dadurch gekennzeichnet, daß in das Flanschelement (50, 52) eine Kraft in Längsrichtung des Rohres (22) einleitbar ist.

19. Rohrleitung nach Anspruch 18, dadurch gekennzeichnet, daß die Rohrleitung (20) mindestens eine Rohrverbindung (48), an der zwei Rohre (22a, 22b) aneinandergrenzen, und ein Flanschelement, an dem Krafteinleitungselemente (70) des einen Rohres (22a) und des anderen Rohres (22b) festgelegt sind, umfaßt.

20. Rohrleitung nach Anspruch 18, dadurch gekennzeichnet, daß die Rohrleitung (20) mindestens eine Rohrverbindung (48), an der zwei Rohre (22a, 22b) aneinandergrenzen, sowie ein erstes Flanschelement (50), an dem Krafteinleitungselemente (70) des einen Rohres (22a) festgelegt sind, und ein zweites Flanschelement (52), an dem Krafteinleitungselemente (70) des anderen Rohres (22b) festgelegt sind, umfaßt, wobei das erste Flanschelement (50) und das zweite Flanschelement (52) mit einstellbarem Abstand voneinander in Längsrichtung der Rohre (22a, 22b) aneinander festlegbar sind.

21. Rohrleitung nach einem der voranstehenden Ansprüche, dadurch gekennzeichnet, daß die Armierung Durchbrüche (42) aufweist, die in einem in Längsrichtung des Rohres (22) im wesentlichen periodischen Muster angeordnet sind.

22. Rohrleitung nach Anspruch 21, dadurch gekennzeichnet, daß das Muster eine Periodizitätslänge aufweist, die kleiner ist als ungefähr 1/5, vorzugsweise kleiner als ungefähr 1/10 des Umfanges des Rohres (22).

23. Rohrleitung nach einem der Ansprüche 21 oder 22, dadurch gekennzeichnet, daß das Muster aus mehreren, jeweils in Längsrichtung des Rohres (22) im wesentlichen periodischen Teilmustern (47a, 47b) mit im wesentlichen derselben Periodizitätslänge zusammengesetzt ist, wobei die Durchbrüche (42) jeweils eines Teilmusters (47a) gegenüber den Durchbrüchen (42) der anderen Teilmuster (47b) in Längsrichtung des Rohres um eine Strecke, die kleiner ist als die Periodizitätslänge der Teilmuster, versetzt angeordnet sind.

24. Rohrleitung nach einem der Ansprüche 21 bis 23, dadurch gekennzeichnet, daß die Armierung ein Gitter (26) aus sich kreuzenden, längs der Außenwand (24) des Rohres (22) verlaufenden Gitterstäben (30, 36) umfaßt.

25. Rohrleitung nach Anspruch 24, dadurch gekennzeichnet, daß das Gitter (26) Scharen (28, 34) von Gitterstäben (30, 36) umfaßt, wobei die Gitterstäbe (30, 36) jeder Schar (28, 34) jeweils parallel zu den Gitterstäben (30, 36) derselben Schar (28, 34) ausgerichtet sind und die Gitterstäbe (30, 36) anderer Scharen (28, 34) kreuzen.

26. Rohrleitung nach Anspruch 25, dadurch gekennzeichnet, daß das Gitter (26) mindestens ein Paar von Scharen (28, 34) von Gitterstäben (30, 36) umfaßt, wobei die Gitterstäbe (30) der einen Schar (28) des Paares und die Gitterstäbe (36) der anderen Schar (34) des Paares unter entgegengesetzt gleichen Winkeln gegen die Längsrichtung des Rohres (22) ausgerichtet sind.

27. Rohrleitung nach einem der Ansprüche 25 oder 26, dadurch gekennzeichnet, daß das Gitter (26) zwei Scharen (28, 34) von Gitterstäben (30, 36) umfaßt.

28. Rohrleitung nach Anspruch 27, dadurch gekennzeichnet, daß die Gitterstäbe (30) der einen Schar (28) und die Gitterstäbe (36) der anderen Schar (34) unter entgegengesetzt gleichen Winkeln gegen die Längsrichtung des Rohres (22) ausgerichtet sind.

29. Rohrleitung nach Anspruch 28, dadurch gekennzeichnet, daß der entgegengesetzt gleiche Winkel ungefähr 58° bis 68° beträgt.

30. Rohrleitung nach einem der Ansprüche 28 oder 29, dadurch gekennzeichnet, daß die entgegengesetzt gleichen Winkel unter denen die Gitterstäbe (30) der einen Schar (28) bzw. die Gitterstäbe (36) der anderen Schar (34) gegen die Längsrichtung des Rohres (22) ausgerichtet sind, längs des Rohres (22) variieren.

31. Rohrleitung nach Anspruch 28, dadurch gekennzeichnet, daß der entgegengesetzt gleiche Winkel von einem Fixierungsbereich des Rohres (22) zu einem nächstbenachbarten Fixierungsbereich des Rohres (22) hin monoton zunimmt.

32. Rohrleitung nach Anspruch 28, dadurch gekennzeichnet, daß der entgegengesetzt gleiche Winkel von Fixierungsbereichen des Rohres (22) zu einem zwischen den Fixierungsbereichen des Rohres (22) angeordneten Mittelbereich des Rohres (22) hin monoton zunimmt.

33. Rohrleitung nach einem der voranstehenden Ansprüche, dadurch gekennzeichnet, daß die Armierung zumindest teilweise aus einem Faserverbundwerkstoff besteht.

34. Rohrleitung nach Anspruch 33, dadurch gekennzeichnet, daß die Armierung zumindest teilweise aus Karbonfasern besteht.

35. Rohrleitung nach einem der Ansprüche 33 oder 34, dadurch gekennzeichnet, daß die Armierung zumindest teilweise aus Glasfasern besteht.

36. Rohrleitung nach einem der voranstehenden Ansprüche, dadurch gekennzeichnet, daß ein Gleitmittel zwischen der Armierung und der Außenwand (24) des Rohres (22) angeordnet ist.

37. Rohrleitung nach Anspruch 36, dadurch gekennzeichnet, daß die der Außenwand (24) des Rohres (22) zugewandte Oberfläche der Armierung mit einem Gleitmittel versehen ist.

38. Rohrleitung nach einem der Ansprüche 36 oder 37, dadurch gekennzeichnet, daß ein Gleitmittel in eine die Fasern umgebende Matrix der Armierung eingebettet ist.

39. Rohrleitung nach einem der voranstehenden Ansprüche, dadurch gekennzeichnet, daß das Rohr (22) mit einer Druck-Vorspannung in Längsrichtung des Rohres (22) beaufschlagbar ist.

40. Rohrleitung nach Anspruch 39, dadurch gekennzeichnet, daß das Rohr (22) mit einer Druck-Vorspannung in Längsrichtung des Rohres beaufschlagt ist, die der durch den Betriebs-Innendruck des Rohres (22) bewirkten Zugspannung des Rohres (22) in Längsrichtung des Rohres (22) im wesentlichen entgegengesetzt gleich groß ist.

## Claims

1. A piping comprising at least one pipe and a reinforcement arranged on an outer wall of each pipe,
characterised in that
the reinforcement can be expanded longitudinally of the pipe (22) and has a transverse contraction capacity such that a compressive bias around the circumference of the pipe (22) can be applied to the pipe by expanding the reinforcement longitudinally of the pipe.

2. A piping according to claim 1, characterised in that on expansion of the reinforcement longitudinally of the pipe (22) without any impedance of transverse contraction, the elasticity of the reinforcement is at the most approximately equal to its elasticity on expansion longitudinally of the pipe (22) with transverse contraction impeded by the pipe (22).

3. A piping according to claim 2, characterised in that the elasticity of the reinforcement without any impedance of transverse contraction is at the most approximately half and preferably at the most approximately one-tenth of the elasticity of the reinforcement with transverse contraction impeded.

4. A piping according to any of the preceding claims, characterised in that the reinforcement, at fixing areas spaced apart longitudinally of the pipe (22), is fixed relative to the rod in the longitudinal direction thereof, and between the fixing areas is capable of sliding over the outer wall (24) of the pipe (22).

5. A pipe according to any of the preceding claims, characterised in that the transverse contraction number of the reinforcement is, at least, approximately 0.4.

6. A piping according to claim 5, characterised in that the transverse contraction number of the reinforcement is, at least, approximately 1.0.

7. A piping according to any of the preceding claims, characterised in that the reinforcement has at least one aperture (42).

8. A piping according to any of the preceding claims, characterised in that the reinforcement is pre-expanded longitudinally of the pipe (22), and a compressive bias around the circumference of the pipe (22) is applied to the pipe through the pre-expansion of the reinforcement.

9. A piping according to claim 8, characterised in that the compressive bias on the pipe (22) around the circumference is opposed and substantially equal to the tensile stress on the pipe (22) around the circumference, caused by the internal operating pressure on the pipe (22).

10. A piping according to any of the preceding claims, characterised in that the piping (20) has force introduction means for expanding the reinforcement longitudinally of the pipe (22).

11. A piping according to claim 10, characterised in that the reinforcement is fixed relative to the pipe (22) by the force introduction means.

12. A piping according to claim 10 or 11, characterised in that the reinforcement has apertures (42) into which force introduction elements (70) of the force introduction means engage.

13. A piping according to claim 12, characterised in that the force introduction elements (70) form a positive connection with the reinforcement, which connection fixes the reinforcement longitudinally of the pipe (22) relative to the force introduction elements (70).

14. A piping according to claim 13, characterised in that the force introduction elements (70) form the positive connection together with edgings of apertures (42) in the reinforcement.

15. A piping according to claim 13, characterised in that the force introduction elements (70) form the positive connection together with edgings of apertures (42) in the reinforcement and together with positive connection elements (74a, 74b), which are arranged between the force introduction elements (70) and the edgings and made of hardened material, the hardened material being inserted in pasty or fluid form.

16. A piping according to any of claims 12 to 15, characterised in that the force introduction means of a pipe (22) are arranged at an end portion of the pipe (22).

17. A piping according to any of claims 12 to 16, characterised in that the force introduction means of a pipe (22) comprise at least one flange element (50, 52), to which the force introduction elements (70) are attached.

18. A piping according to claim 17, characterised in that a force in the longitudinal direction of the pipe (22) can be directed into the flange element (50, 52).

19. A piping according to claim 18, characterised in that the piping (20) comprises at least one pipe connection (48), at which two pipes (22a, 22b) adjoin, and a flange element to which force introduction elements (70) of one pipe (22a) and of the other pipe (22b) are attached.

20. A piping according to claim 18, characterised in that the piping (20) comprises at least one pipe connection (48), at which two pipes (22a, 22b) adjoin, a first flange element (50) to which force introduction elements (70) of one pipe (22a) are attached, and a second flange element (52) to which force introduction elements (70) of the other pipe (22b) are attached, the first flange element (50) and the second flange element (52) being capable of being attached to each other an adjustable distance apart longitudinally of the pipes (22a, 22b).

21. A piping according to any of the preceding claims, characterised in that the reinforcement has apertures (42) arranged in a substantially periodic pattern longitudinally of the pipe (22).

22. A piping according to claim 21, characterised in that the pattern has a periodicity length less than approximately one-fifth and preferably less than approximately one-tenth of the circumference of the pipe (22).

23. A piping according to claim 21 or 22, characterised in that the pattern is made up of a plurality of component patterns (47a, 47b) substantially periodic longitudinally of the pipe (22) and with substantially the same periodicity length, the apertures (42) in one respective component pattern (47a) being offset from the apertures (42) in the other component patterns (47b) longitudinally of the pipe, by a distance shorter than the periodicity length of the component patterns.

24. A piping according to any of claims 21 to 23, characterised in that the reinforcement comprises a lattice (26) of intersecting lattice bars (30, 36) extending along the outer wall (24) of the pipe (22).

25. A piping according to claim 24, characterised in that the lattice (26) comprises families (28, 34) of lattice bars (30, 36), the bars (30, 36) of each family (28, 34) being aligned parallel with the bars (30, 36) of the same family (28, 34) and crossing the bars (30, 36) of other families (28, 34).

26. A piping according to claim 25, characterised in that the lattice (26) comprises at least one pair of families (28, 34) of lattice bars (30, 36), the bars (30) of one family (28) of the pair and the bars (36) of the other family (34) of the pair being aligned at equal, opposing angles to the longitudinal direction of the pipe (22).

27. A piping according to claim 25 or 26, characterised in that the lattice (26) comprises two families (28, 34) of lattice bars (30, 36).

28. A piping according to claim 27, characterised in that the lattice bars (30) of one family (28) and the lattice bars (36) of the other family (34) are aligned at equal, opposing angles to the longitudinal direction of the pipe (22).

29. A piping according to claim 28, characterised in that the opposing equal angle is approximately 58° to 68°.

30. A piping according to claim 28 or 29, characterised in that the opposing equal angles, at which the lattice bars (30) of one family (28) and the lattice bars (36) of the other family (34) are arranged to the longitudinal direction of the pipe (22), vary along the pipe (22).

31. A piping according to claim 28, characterised in that the opposing equal angle increases uniformly from one fixing area of the pipe (22) to the next.

32. A piping according to claim 28, characterised in that the opposing equal angle increases uniformly from fixing areas of the pipe (22) to a central area of the pipe (22) between the fixing areas thereof.

33. A piping according to any of the preceding claims, characterised in that the reinforcement consists at least partly of a fibre composite.

34. A piping according to claim 33, characterised in that the reinforcement consists at least partly of carbon fibres.

35. A piping according to claim 33 or 34, characterised in that the reinforcement consists at least partly of glass fibres.

36. A piping according to any of the preceding claims, characterised in that a lubricant is arranged between the reinforcement and the outer wall (24) of the pipe (22).

37. A piping according to claim 36, characterised in that the surface of the reinforcement facing towards the outer wall (24) of the pipe (22) is provided with a lubricant.

38. A piping according to claim 36 or 37, characterised in that a lubricant is embedded in a matrix of the reinforcement surrounding the fibres.

39. A piping according to any of the preceding claims, characterised in that a compressive bias longitudinally of the pipe (22) may be applied to the pipe (22).

40. A piping according to claim 39, characterised in that a compressive bias longitudinally of the pipe (22) may be applied to the pipe (22), the bias being opposite and substantially equal to the tensile stress on the pipe (22) longitudinally thereof, caused by the internal operating pressure on the pipe (22).

## Revendications

1. Canalisation comprenant au moins un tube et une armature respective, disposée sur une paroi extérieure dudit tube,
caractérisée par le fait
que l'armature est extensible dans la direction longitudinale du tube (22), et présente une faculté de contraction transversale telle que le tube (22) peut être sollicité par une précontrainte de pression s'exerçant dans la direction périphérique dudit tube (22), lors d'un allongement de l'armature dans la direction longitudinale dudit tube (22).

2. Canalisation selon la revendication 1, caractérisée par le fait que, lors d'un allongement de l'armature dans la direction longitudinale du tube (22) sans entrave à la contraction transversale, l'élasticité de l'armature est au maximum approximativement égale à l'élasticité de l'armature lors d'un allongement de ladite armature dans la direction longitudinale du tube (22), avec entrave à la contraction transversale provoquée par le tube (22).

3. Canalisation selon la revendication 2, caractérisée par le fait que l'élasticité de l'armature, sans entrave à la contraction transversale, représente au maximum approximativement la moitié, de préférence au maximum approximativement un dixième de l'élasticité de l'armature avec entrave à la contraction transversale.

4. Canalisation selon l'une des revendications précédentes, caractérisée par le fait que l'armature est verrouillée à demeure dans la direction longitudinale du tube (22), vis-à-vis de ce dernier, dans des zones de consignation à demeure mutuellement distantes dans la direction longitudinale du tube (22), et peut coulisser sur la paroi extérieure (24) dudit tube (22) entre lesdites zones de consignation à demeure.

5. Canalisation selon l'une des revendications précédentes, caractérisée par le fait que l'indice de contraction transversale de l'armature est d'au moins approximativement 0,4.

6. Canalisation selon la revendication 5, caractérisée par le fait que l'indice de contraction transversale de l'armature est d'au moins approximativement 1,0.

7. Canalisation selon l'une des revendications précédentes, caractérisée par le fait que l'armature comporte au moins un évidement (42).

8. Canalisation selon l'une des revendications précédentes, caractérisée par le fait que l'armature est soumise à extension préalable dans la direction longitudinale du tube (22) et ledit tube (22) est sollicité, suite à l'extension préalable de l'armature, par une précontrainte de pression s'exerçant dans la direction périphérique du tube (22).

9. Canalisation selon la revendication 8, caractérisée par le fait que la précontrainte de pression du tube (22), dans la direction périphérique, représente sensiblement l'inverse de la contrainte de traction du tube (22) dans la direction périphérique dudit tube (22), provoquée par la pression régnant en service à l'intérieur dudit tube (22).

10. Canalisation selon l'une des revendications précédentes, caractérisée par le fait que ladite canalisation (20) présente des moyens d'induction de forces en vue de l'allongement de l'armature dans la direction longitudinale du tube (22).

11. Canalisation selon la revendication 10, caractérisée par le fait que l'armature est verrouillée à demeure, vis-à-vis du tube (22), par les moyens d'induction de forces.

12. Canalisation selon l'une des revendications 10 ou 11, caractérisée par le fait que l'armature comporte des évidements (42) dans lesquels pénètrent des éléments (70) d'induction de forces des moyens d'induction de forces.

13. Canalisation selon la revendication 12, caractérisée par le fait que les éléments (70) d'induction de forces constituent, avec l'armature, un assemblage par concordance de formes qui consigne l'armature à demeure dans la direction longitudinale du tube (22), vis-à-vis desdits éléments (70) d'induction de forces.

14. Canalisation selon la revendication 13, caractérisée par le fait que les éléments (70) d'induction de forces constituent l'assemblage par concordance de formes en coopération avec des bordures marginales d'évidements (42) de l'armature.

15. Canalisation selon la revendication 13, caractérisée par le fait que les éléments (70) d'induction de forces constituent l'assemblage par concordance de formes en coopération avec des bordures marginales d'évidements (42) de l'armature, et avec des éléments de conformation (74a, 74b) qui sont interposés entre lesdits éléments (70) d'induction de forces et lesdites bordures marginales, et consistent en un matériau durci déversé sous une forme pâteuse ou coulante.

16. Canalisation selon l'une des revendications 12 à 15, caractérisée par le fait que les moyens d'induction de forces d'un tube (22) sont respectivement disposés dans une région extrême dudit tube (22).

17. Canalisation selon l'une des revendications 12 à 16, caractérisée par le fait que les moyens d'induction de forces d'un tube (22) englobent au moins un élément de bridage (50, 52) sur lequel les éléments (70) d'induction de forces sont fermement arrêtés.

18. Canalisation selon la revendication 17, caractérisée par le fait qu'une force, agissant dans la direction longitudinale du tube (22), peut être induite dans l'élément de bridage (50, 52).

19. Canalisation selon la revendication 18, caractérisée par le fait que ladite canalisation (20) englobe au moins une solidarisation tubulaire (48) sur laquelle deux tubes (22a, 22b) sont mutuellement limitrophes, et un élément de bridage sur lequel sont fermement arrêtés des éléments (70) d'induction de forces de l'un (22a) des tubes, et de l'autre tube (22b).

20. Canalisation selon la revendication 18, caractérisée par le fait que ladite canalisation (20) englobe au moins une solidarisation tubulaire (48) sur laquelle deux tubes (22a, 22b) sont mutuellement limitrophes, ainsi qu'un premier élément de bridage (50) sur lequel sont fermement arrêtés des éléments (70) d'induction de forces de l'un (22a) des tubes, et un second élément de bridage (52) sur lequel sont fermement arrêtés des éléments (70) d'induction de forces de l'autre tube (22b), le premier élément de bridage (50) et le second élément de bridage (52) pouvant être verrouillés l'un à l'autre avec espacement mutuel réglable dans la direction longitudinale des tubes (22a, 22b).

21. Canalisation selon l'une des revendications précédentes, caractérisée par le fait que l'armature comporte des évidements (42) agencés en une configuration pour l'essentiel périodique dans la direction longitudinale du tube (22).

22. Canalisation selon la revendication 21, caractérisée par le fait que la configuration présente une longueur de périodicité inférieure à environ 1/5, de préférence inférieure à environ 1/10 du périmètre du tube (22).

23. Canalisation selon l'une des revendications 21 ou 22, caractérisée par le fait que la configuration est composée de plusieurs configurations partielles (47a, 47b) pour l'essentiel respectivement périodiques dans la direction longitudinale du tube (22), avec sensiblement la même longueur de périodicité, les évidements (42) d'une configuration partielle (47a) considérée étant agencés avec décalage dans la direction longitudinale du tube, vis-à-vis des évidements (42) des autres configurations partielles (47b), d'une distance plus petite que la longueur de périodicité des configurations partielles.

24. Canalisation selon l'une des revendications 21 à 23, caractérisée par le fait que l'armature englobe un entrelacs (26) constitué par des baguettes (30, 36) s'entrecroisant et s'étendant le long de la paroi extérieure (24) du tube (22).

25. Canalisation selon la revendication 24, caractérisée par le fait que l'entrelacs (26) englobe des assemblages (28, 34) de baguettes (30, 36), les baguettes (30, 36) de chaque assemblage (28, 34) étant à chaque fois orientées parallèlement aux baguettes (30, 36) du même assemblage (28, 34), et croisant les baguettes (30, 36) d'autres assemblages (28, 34).

26. Canalisation selon la revendication 25, caractérisée par le fait que l'entrelacs (26) englobe au moins une paire d'assemblages (28, 34) de baguettes (30, 36), les baguettes (30) de l'un (28) des assemblages de la paire, et les baguettes (36) de l'autre assemblage (34) de ladite paire, étant orientées selon des angles opposés vis-à-vis de la direction longitudinale du tube (22).

27. Canalisation selon l'une des revendications 25 ou 26, caractérisée par le fait que l'entrelacs (26) englobe deux assemblages (28, 34) de baguettes (30, 36).

28. Canalisation selon la revendication 27, caractérisée par le fait que les baguettes (30) de l'un (28) des assemblages, et les baguettes (36) de l'autre assemblage (34), sont orientées selon des angles opposés vis-à-vis de la direction longitudinale du tube (22).

29. Canalisation selon la revendication 28, caractérisée par le fait que l'angle opposé mesure environ de 58° à 68°.

30. Canalisation selon l'une des revendications 28 ou 29, caractérisée par le fait que les angles opposés, selon lesquels les baguettes (30) de l'un (28) des assemblages ou les baguettes (36) de l'autre assemblage (34) sont respectivement orientées, vis-à-vis de la direction longitudinale du tube (22), varient le long dudit tube (22).

31. Canalisation selon la revendication 28, caractérisée par le fait que l'angle opposé augmente, de manière monotone, d'une zone de consignation à demeure du tube (22) vers une zone immédiatement voisine de consignation à demeure dudit tube (22).

32. Canalisation selon la revendication 28, caractérisée par le fait que l'angle opposé de zones de consignation à demeure du tube (22) augmente, de manière monotone, en direction d'une zone centrale dudit tube (22) qui est interposée entre lesdites zones de consignation à demeure du tube (22).

33. Canalisation selon l'une des revendications précédentes, caractérisée par le fait que l'armature consiste, au moins partiellement, en un matériau composite fibreux.

34. Canalisation selon la revendication 33, caractérisée par le fait que l'armature consiste, au moins partiellement, en des fibres de carbone.

35. Canalisation selon l'une des revendications 33 ou 34, caractérisée par le fait que l'armature consiste, au moins partiellement, en des fibres de verre.

36. Canalisation selon l'une des revendications précédentes, caractérisée par le fait qu'un agent de glissement est interposé entre l'armature et la paroi extérieure (24) du tube (22).

37. Canalisation selon la revendication 36, caractérisée par le fait que la surface de l'armature, qui est tournée vers la paroi extérieure (24) du tube (22), est pourvue d'un agent de glissement.

38. Canalisation selon l'une des revendications 36 ou 37, caractérisée par le fait qu'un agent de glissement est incorporé dans une matrice de l'armature, qui entoure les fibres.

39. Canalisation selon l'une des revendications précédentes, caractérisée par le fait que le tube (22) peut être sollicité par une précontrainte de pression dans la direction longitudinale dudit tube (22).

40. Canalisation selon la revendication 39, caractérisée par le fait que le tube (22) est sollicité, dans la direction longitudinale dudit tube, par une précontrainte de pression représentant sensiblement l'inverse de la contrainte de traction du tube (22) dans la direction longitudinale dudit tube (22), provoquée par la pression régnant en service à l'intérieur dudit tube (22).
